(19) Europäisches Patentamt
European Patent Office
Office européen des brevets

(11) **EP 1 561 964 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(51) Int Cl.:
*F16F 7/10* ^(2006.01)    *H01M 2/10* ^(2006.01)

(21) Anmeldenummer: **05001180.8**

(22) Anmeldetag: **21.01.2005**

(54) **Schwingungstilger mit zumindest zwei alternativ befestigbaren Tilgermassen**

Dynamic damper with at least two alternatively attachable damping masses

Amortisseur dynamique avec au moins deux masses d'amortissement alternativement attachables

(84) Benannte Vertragsstaaten:
**DE FR GB IT**

(30) Priorität: **07.02.2004 DE 102004006132**

(43) Veröffentlichungstag der Anmeldung:
**10.08.2005 Patentblatt 2005/32**

(73) Patentinhaber: **Bayerische Motoren Werke Aktiengesellschaft
80809 München (DE)**

(72) Erfinder:
• **Röhrl, Sabine
82110 Germering (DE)**
• **Heiss, Harald
80637 München (DE)**

(56) Entgegenhaltungen:
**DE-A1- 3 843 676        US-A- 989 958**

• **PATENT ABSTRACTS OF JAPAN Bd. 008, Nr. 203 (M-326), 18. September 1984 (1984-09-18) & JP 59 093544 A (SUMITOMO SEIMITSU KOGYO KK), 30. Mai 1984 (1984-05-30)**
• **PATENT ABSTRACTS OF JAPAN Bd. 006, Nr. 256 (M-179), 15. Dezember 1982 (1982-12-15) & JP 57 151450 A (TOYO KOGYO KK), 18. September 1982 (1982-09-18)**
• **PATENT ABSTRACTS OF JAPAN Bd. 007, Nr. 217 (M-245), 27. September 1983 (1983-09-27) & JP 58 112883 A (TOYO KOGYO KK), 5. Juli 1983 (1983-07-05)**

**EP 1 561 964 B1**

**Beschreibung**

Die Erfindung betrifft einen Schwingungstilger mit zumindest zwei alternativ befestigbaren Tilgermassen.

Aus der DE 38 43 676 A1 ist ein Schwingungstilger mit einer Tilgermasse bekannt, die auf einer Tilgerhalterung befestigt ist. Die Tilgerhalterung ist über ein Drehgelenk an einer Fahrzeugkarosserie angelenkt, und stützt sich beabstandet zum Drehgelenk über Tilgerfedern und Tilgerdämpfer an der Fahrzeugkarosserie ab. Bevorzugt wird die Batterie des Fahrzeugs als Tilgermasse verwendet.

Aufgabe der Erfindung ist es, den bekannten Schwingungstilger für ein Fahrzeug so weiter zu entwikkeln, dass er für unterschiedliche Fahrzeugvarianten geeignet ist.

Diese Aufgabe wird mit einem Schwingungstilger mit den Merkmalen des Patentanspruchs 1 gelöst.

Erfindungsgemäß ist die Tilgerhalterung so ausgelegt, dass zumindest zwei unterschiedlich schwere Tilgermassen alternativ darauf so befestigbar sind, dass aufgrund unterschiedlicher Entfernungen der Schwerpunkte der Tilgermassen vom Drehgelenk trotz der unterschiedlichen Gewichtskräfte der Tilgermassen ein etwa gleich großes Drehmoment aufgrund der Gewichtskräfte um das Drehgelenk entsteht. Bei einem Fahrzeug wird aus Gewichtsgründen angestrebt, dass als Tilgermasse ein sowieso vorhandenes Fahrzeugbauteil verwendet wird. Geeignete Fahrzeugbauteile sind beispielsweise eine Batterie oder ein Reserverad. Diese Fahrzeugbauteile können jedoch je nach Fahrzeugvariante unterschiedliche Größen und Massen aufweisen. Die erfindungsgemäße Ausführung des Schwingungstilgers ist für alle Fahrzeugvarianten geeignet, ohne dass die Tilgerwirkung sich verändern würde. Dazu muss das Drehmoment um das Drehgelenk aufgrund der Gewichtskraft der Tilgungsmasse unabhängig vom verwendeten Fahrzeugbauteil gleich bleiben. Wenn ein leichtes Fahrzeugbauteil als Tilgermasse verwendet wird, muss der Schwerpunkt des leichten Fahrzeugbauteils entsprechend weiter vom Drehgelenk entfernt sein, als bei einem schweren Fahrzeugbauteil, um ein gleiches Drehmoment zu erzeugen.

In der Praxis sollte also die Tilgerhalterung so ausgeführt sein, dass unterschiedliche Fahrzeugbauteile, wie beispielsweise eine Batterie mit 80 Ah und eine Batterie mit 90 Ah oder ein Reserverad mit Stahlfelge und ein Reserverad mit Aluminiumfelge, in unterschiedlichen Entfernungen zur Drehachse daran befestigt werden können. Die Tilgerhalterung weist trotzdem bevorzugt nur eine Befestigung für die Tilgermasse auf, die aber für alle Tilgermassen geeignet ist.

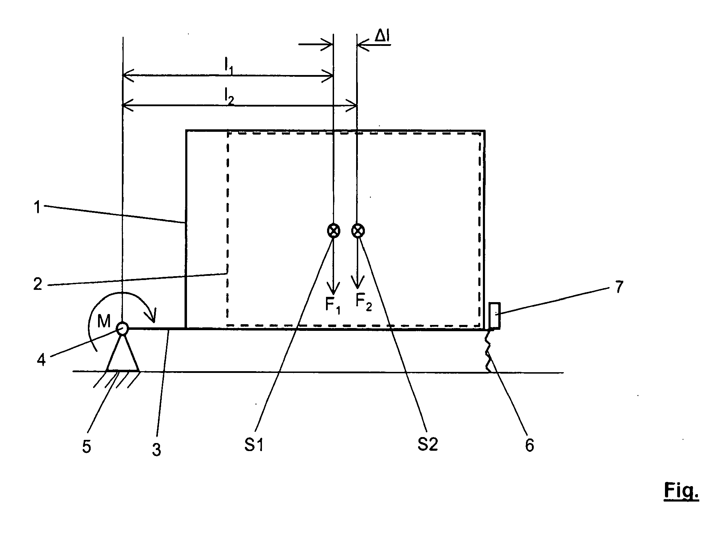

In der Zeichnung ist ein Ausführungsbeispiel der Erfindung dargestellt, anhand dessen die Erfindung im folgenden näher beschrieben wird. Die einzige Figur zeigt in schematischer Darstellungsweise eine Prinzipdarstellung eines Schwingungstilgers für ein Fahrzeug mit einer Batterie als Tilgermasse.

Bei dem Schwingungstilger ist eine Batterie 1 als Tilgermasse ist auf einer Tilgerhalterung 3 befestigt. Die Tilgerhalterung 3 ist über ein Drehgelenk 4 an einer Fahrzeugkarosserie 5 angelenkt. Zusätzlich stützt sie sich beabstandet zum Drehgelenk 4 über ein Feder-Dämpfungselement 6 an der Fahrzeugkarosserie 5 ab, die aus einer Tilgerfeder und einem Tilgerdämpfer besteht. Die Eigenschaften des Schwingungstilgers werden maßgeblich bestimmt durch das Drehmoment M im Drehgelenk 4, das aufgrund der Gewichtskraft $F_1$ der Batterie 1 erzeugt wird. Dieses Drehmoment M ist das Produkt aus der Gewichtskraft $F_1$ der Batterie 1 mit der Entfernung $l_1$ des Schwerpunkts S1 der Batterie 1 vom Drehgelenk 4.

Wenn nun bei einer anderen Fahrzeugvariante anstelle der Batterie 1 eine etwas kleinere und leichtere Batterie 2 - in der Figur gestrichelt dargestellt - zum Einsatz kommt, sollte derselbe Schwingungstilger eingesetzt werden können und dabei die gleichen Eigenschaften aufweisen. Dazu kann die Batterie 2 etwas weiter entfernt vom Drehgelenk 4 auf der Tilgerhalterung 3 befestigt werden. Der Schwerpunkt S2 der Batterie 2 befindet sich dadurch um die zusätzliche Entfernung $\Delta l$ weiter vom Drehgelenk 4 entfernt als es der Schwerpunkt S1 der Batterie 1 war. Diese zusätzliche Entfernung $\Delta l$ bzw. die absolute Entfernung $l_2 = l_1 + \Delta l$ des Schwerpunkts S2 der Batterie 2 vom Drehgelenk 4 muss so gewählt werden, dass trotz der geringeren Gewichtskraft $F_2$ der Batterie 2 das Drehmoment M im Drehgelenk 4 bei beiden Batterien 1 und 2 gleich groß ist. Es muss also gelten:

$$M = F_1 {}^* l_1 = F_2 {}^* (l_1 + \Delta l)$$

Die Anbringung der unterschiedlichen Batterien 1 und 2 auf der Tilgerhalterung 3 wird dadurch erleichtert, dass die Batterien 1 und 2 gleich breit sind. Die Tilgerhalterung 3 kann dadurch einen U-förmigen Querschnitt aufweisen, in dem die Batterien 1 und 2 seitlich gehalten sind. Sie müssen also nur in Längsrichtung im richtigen Abstand zum Drehgelenk 4 so befestigt werden, dass das gewünschte Drehmoment M entsteht. Dazu dient eine Befestigungsschraube, mit der die jeweilige Batterie in jeder gewünschten Position festgeklemmt werden kann.

Die Tilgerhalterung 3 weist an ihrem rechten Ende einen Anschlag 7 auf, der für beide Batterien 1 und 2 geeignet ist. Dies ist dadurch möglich, weil bei der leichteren Batterie 2 aufgrund der geringeren Größe der Schwerpunkt S2 weiter vom Drehgelenk 4 entfernt ist, als bei der größeren schweren Batterie 1. Bei nur relativ geringen Gewichtsunterschieden, wie das bei Batterien mit 80 Ah und 90 Ah der Fall ist, kann so das geringere Gewicht der Batterie 2 durch die größere Entfernung $l_2$ vom Drehgelenk 4 ausgeglichen werden, sodass trotzdem beide Batterien praktisch das gleiche Drehmoment M erzeugen.

Das Drehgelenk 4 besteht aus zwei Schrauben, die jeweils durch eine Ausnehmung in der Fahrzeugkarosserie 5 hindurchgesteckt sind und in je einer Einschweißmutter verschraubt sind, die an den beiden gegenüberliegenden Seiten des U-förmigen Querschnitts der Tilgerhalterung 3 angebracht sind. Die Schrauben dienen zusammen mit den Ausnehmungen in der Fahrzeugkarosserie 5 als Gleitlager und bilden eine gemeinsame, breite, torsionssteife Drehachse.

Die Montage des Schwingungstilgers kann so auf eine sehr einfache Weise erfolgen: Die Tilgerhalterung 3 wird nur mit den beiden Schrauben mit der Fahrzeugkarosserie 5 verschraubt, sodass sie um die Drehachse schwenkbar ist. Eine dritte Schraube ist notwendig, um die Tilgerhalterung 3 mit dem Feder-Dämpfungselement 6 zu verbinden. Der Montageaufwand beschränkt sich also auf das Einschrauben von drei Schrauben. Die dafür entsprechend geringe Montagezeit ist nicht nur bei der Erstmontage, sondern auch bei Reparaturen in der Werkstatt von Vorteil.

**Patentansprüche**

1. Schwingungstilger mit zumindest zwei alternativ befestigbaren Tilgermassen (1,2), wobei Tilgermasse (1,2) auf einer Tilgerhalterung (3) befestigt ist, die über ein Drehgelenk (4) an einer Fahrzeugkarosserie (5) angelenkt ist, und beabstandet zum Drehgelenk (4) sich über zumindest eine Tilgerfeder und zumindest einen Tilgerdämpfer an der Fahrzeugkarosserie (5) abstützt, wobei die Tilgermassen (1,2) unterschiedlich schwer sind, und die Gewichte der Tilgermassen (1,2) und die unterschiedlichen Entfernungen ($l_1,l_2$) der Schwerpunkte ($S_1$, $S_2$) der Tilgermassen (1,2) vom Drehgelenk (4) so dimensioniert sind, dass das Drehmoment (11) aufgrund der Gewichtskräfte ($F_1$, $F_2$) der Tilgermassen (1,2) um das Drehgelenk (4) gleich groß ist, wenn die jeweilige Tilgermasse (1,2) mit ihren dem Drehgelenk (4) abgewandten Seite an einem Anschlag (7) der Tilgerhalterung (3) anliegt.

2. Schwingungstilger nach Anspruch 1, **dadurch gekennzeichnet, dass** als Tilgermasse (1, 2) jeweils eine Batterie dient.

3. Schwingungstilger nach Anspruch 1 oder 2, **dadurch gekennzeichnet, dass** die Tilgerhalterung (3) nur eine Befestigung für die Tilgermasse (1, 2) aufweist, die für alle Tilgermassen (1, 2) geeignet ist.

**Claims**

1. A vibration absorber with at least two alternatively fastenable absorption masses (1, 2), wherein the absorption masses (1, 2) are fastened to a holder (3) pivoted via a swivel joint (4) to a vehicle body (5), and at a distance from the swivel joint (4) at least one absorption spring and at least one absorption damper project from the vehicle body (5), wherein the absorption masses (1, 2) differ in weight and the weight of the absorption masses (1, 2) and the different distances ($l_1$, $l_2$) between the centres of gravity (S1, S2) of the absorption masses (1, 2) and the swivel joint (4) are so dimensioned that the torques (M) due to the weights ($F_1$, $F_2$) of the absorption masses (1, 2) round the swivel joint (4) are approximately the same, when the side of each respective absorption mass (1, 2) remote from the swivel joint (4) abuts a stop (7) on the holder (3).

2. A vibration absorber according to claim 1, **characterised in that** each absorption mass (1, 2) is a battery.

3. A vibration absorber according to claim 1 or claim 2, **characterised in that** the holder (3) only has a fastening for the absorption mass (1, 2) which is suitable for all absorption masses (1, 2).

**Revendications**

1. Amortisseur de vibrations comportant au moins deux masses d'amortissement (1, 2) susceptibles d'être fixées alternativement, les masses d'amortissement (1, 2) étant fixées à un support d'amortissement (3) articulé à une carrosserie de véhicule (5) par une articulation de rotation (4) en s'appuyant à distance de l'articulation de rotation (4) par au moins un ressort amortisseur et au moins un amortisseur contre la carrosserie (5) du véhicule, les masses d'amortissement (1, 2) étant différentes et la masse des masses d'amortissement (1, 2) et les distances différentes ($l_1$, $l_2$) des centres de gravité ($S_1$, $S_2$) des masses d'amortissement (1, 2) par rapport à l'articulation de rotation (4) étant dimensionnées pour que les moments (11) des poids ($F_1$, $F_2$) des masses d'amortissement (1, 2) par rapport à l'articulation de rotation (4) soient égaux si les masses d'amortissement (1, 2) respectives s'appuient par leur cotés non tourné vers l'articulation de rotation (4) contre une butée (7) du support d'amortissement (3).

2. Amortisseur de vibration selon la revendication 1, **caractérisé en ce que** chaque masse d'amortissement (1, 2) est constituée par une batterie.

3. Amortisseur de vibration selon l'une quelconque des revendications 1 ou 2,

**EP 1 561 964 B1**

**caractérisé en ce que**
le support d'amortissement (3) ne comporte qu'une fixation pour les masses d'amortissement (1, 2) utilisable pour toutes les masses d'amortissement (1, 2).

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3843676 A1